# EUROPÄISCHE PATENTSCHRIFT

(11) **EP 0 829 657 B1**
(45) Veröffentlichungstag und Bekanntmachung des Hinweises auf die Patenterteilung: **04.12.2002**
(21) Anmeldenummer: 97110355.1
(22) Anmeldetag: 25.06.1997
(51) Int. Cl.: F16F 15/12, F16F 15/14, C08J 5/12

(54) **Verfahren zum Einpressen eines überdimensionierten, ringförmigen, elastomeren Federkörpers in einem Ringspalt**
Method to press an oversizid elastomeric ring shaped spring body into an annular gap
Méthode pour presser un élément de ressort en forme d'anneau élastomère surdimensionné dans un espace annulaire

(30) Priorität: 16.09.1996 DE 19637643
(43) Veröffentlichungstag der Anmeldung: 18.03.1998
(73) Patentinhaber: Carl Freudenberg KG, 69469 Weinheim (DE)
(72) Erfinder: Lau, Helmut, Dr., 79418 Schliengen (DE); Schwerdt, Hans-Werner, 69514 Laudenbach (DE)

(56) Entgegenhaltungen:
- EP-A- 0 738 775
- DE-A- 4 404 255
- GB-A- 1 369 228
- PATENT ABSTRACTS OF JAPAN vol. 009, no. 119 (C-282), 23. Mai 1985 (1985-05-23) & JP 60 006774 A (TOUKAI GOMU KOGYO KK), 14. Januar 1985 (1985-01-14)
- : "Römpp Chemie Lexikon, 9. Auflage, Seite 949 ", , J. FALBE, M. REGLITZ, STUTTGART, NEW YORK

## Beschreibung

Die Erfindung betrifft ein Verfahren zum Einpressen eines überdimensionierten ringförmigen, elastomeren Federkörpers aus einem polymeren Werkstoff in den durch den radialen Abstand gebildeten Spalt zwischen zwei unnachgiebigen, insbesondere metallischen, konzentrisch zueinander angeordneten Maschinenteilen.

Bei dem Verfahren geht man so vor, daß man den überdimensionierten, ringförmigen, Federkörper und/oder die den Ringspalt begrenzenden Flächen der Maschinenteile mit einem aktivierbaren Kleber benetzt, welcher den Federkörper an zumindest einem der unnachgiebigen Maschinenteile fixiert, nachdem er verformt und in den Ringspalt eingepreßt wurde.

Hier und im folgenden soll unter dem Begriff "überdimensioniert" verstanden werden, daß der Federkörper eine größere radiale Erstreckung (Dicke) aufweist als der Ringspalt, so daß jener während des Einpressens eine dreidimensionale Verformung infolge der Inkompressibilität seines Werkstoffes erfährt, dies jedoch ohne wesentliche Volumenänderung.

Zum Erzeugen eines gummielastischen Verbundbauteiles mit hohem Reibschluß wird üblicherweise ein stark überdimensionierter, ringförmiger, elastomerer Federkörper unter hoher Vorspannung und unter Verwendung reibungsmindemder, hochviskoser Additive in den Ringspalt zweier unnachgiebiger Bauteile eingepreßt.

Werden jedoch dabei die Bauteile miteinander verklebt, können das Übermaß und damit die Vorspannung vermindert werden.

### Stand der Technik

GB-PS 1 369 228 schlägt in diesem Zusammenhang die Verwendung eines rasch und kalt aushärtenden Klebers auf Basis Cyanacrylat vor. Dieser Kleber wird auf die in Verbindung zu bringenden Gummi- bzw. Metallflächen aufgetragen und wirkt gleichzeitig als Gleitmittel während der Montage, jedoch als Kleber nach dem Aktivieren und Kalt-Aushärten.

Diese Lösung ist jedoch technisch wenig befriedigend, da das Cyanacrylat eine sehr harte und spröde Kleberschicht ausbildet, was besonders bei weichen elastomeren Federkörpern die Haltbarkeit beeinträchtigt. Ein weiterer Nachteil von Cyanacrylat ist, daß die Vemetzungsreaktion sofort einsetzt und relativ schnell abgeschlossen ist. Eingepreßte Federkörper haben daher keine Zeit, die energetisch günstigste Position mit der geringsten Eigenspannung einzunehmen, weil sie schon vorher mit den Metallflächen festhaftend verbunden werden, wobei teilweise überhöhte Spannungen eingefroren werden.

### Darstellung der Erfindung

Die Aufgabe der vorliegenden Erfindung ist es, ein solches Klebeverfahren, bei welchem der Klebstoff gleichzeitig als Gleitmittel wirkt, dahingehend zu verbessern, daß die genannten Nachteile bei der Verwendung von Cyanacrylat umgangen werden können. Angesichts der Verfügbarkeit der Ausgangsstoffe und der Erfordernis, die besagten Gummi-/Metallelemente unterschiedlichen äußeren Einflüssen aussetzen zu müssen, wie z.B. hohen oder tiefen Temperaturen, Drucken oder aggressiven Medien, ist es wünschenswert, eine Vielzahl von reaktiven Klebertypen zur Verfügung zu haben. Dabei soll kein zusätzlicher Verfahrensschritt zum Auftragen eines solchen Gleitmittels notwendig sein, und ferner soll die Haftung zwischen den elastomeren und den unnachgiebigen Maschinenteile nach dem Einbau nicht durch überschüssiges Gleitmittel beeinträchtigt werden. Es ist daher erforderlich, daß die gleitende Wirkung zwischen den Bauteilen spätestens 48 Stunden nach ihrem Zusammenbau nicht mehr in Erscheinung tritt.

Die Lösung der gestellten Aufgabe erfolgt durch die Merkmale der Ansprüche 1 und 9. Dabei wird in beiden Fassungen der Ansprüche im Oberbegriff von dem in der GB-A1 369 228 beschriebenen Stand der Technik ausgegangen.

### Ausführung der Erfindung

Einem reaktiven Kleber wird ein nicht wasserlösliches, organisches Gleitmittel beigemischt, bis das entstandene Gemisch 20 Vol.-% bis 70 Vol.-% Gleitmittel aus einem oder mehreren Polyestern enthält.

Das eingemischte Gleitmittel besteht zu 30 bis 90 Vol.-% aus polymeren Estern von Mono- und/oder Dicarbonsäuren, vorzugsweise der Maleinsäure, Phthalsäure, Sebacinsäure und Adipinsäure. Die Dichte des Gleitmittels d20/4 kann von 0,91 bis 1,16 variieren. Das Kleber-/Gleitmittelgemisch besitzt eine Viskosität von 200 mPa.s bis 4500 mPa.s.

Mit diesen Vorgaben ist gewährleistet, daß das Gleitmittel unter üblichen Auftragungsbedingungen für den Kleber nach spätestens 48 Stunden in das gummielastische Bauteil eindiffundiert ist und somit keine Gleitwirkung an den Grenzflächen der Bauteile mehr auftritt.

Unter »üblichen Auftragungsbedingungen" wird hier verstanden das Auftragen durch Pinseln, Rollen, Sprühen oder Eintauchen, wobei der entstehende Film Schichtdicken zwischen 1 µm und 100 µm aufweisen kann. Diese Vorgaben sind Stand der Technik und beispielsweise aus DE 44 04 255 A1 entnehmbar.

In der Regel ist es verfahrenstechnisch von Vorteil, zur Einstellung der gewünschten Viskosität des Kleber-/Gleitmittelgemischs mindestens zwei der das Gleitmittel bildenden polymeren Ester miteinander zu mischen. Man erhält dadurch eine große zur Verfügung stehende Variationsbreite an einstellbaren Viskositätswerten. Bei geringerer Berücksichtigung der Material- und Herstellungskosten kann es im einen oder anderen Fall sogar von Vorteil sein, eine Gleitmittelzusammensetzung aus drei oder vier der das Gleitmittel bildenden Estertypen zu kombinieren.

Bevorzugt wählt man wegen ihrer Verfügbarkeit und Preisgünstigkeit als diffusionsfördernde Komponenten für das Gleitmittel aliphatische Kohlenwasserstoffe mit Siedepunkten zwischen 60 und 280°C oder Kohlenwasserstoffe aus Alkoholen oder Benzinfraktionen. Als Beispiele seien noch Isopropanol und Petroleum genannt, welche besonders preiswert erhältlich sind.

Diese Diffusionsförderer sollen, bezogen auf die Gesamtmenge des Gleitmittels, in Anteilen von 70 bis 10 Vol.-% eingesetzt werden. Sie gewährleisten, daß das Gleitmittel spätestens nach 48 Stunden, bei sparsamster Auftragung des Kleber-/Gleitmittelgemischs, vollständig in das elastomere Bauteil eindiffundiert ist und den Kraftschluß zwischen den gummielastischen und den plastischen Maschinenbauteilen nicht mehr beeinträchtigt.

Im Hinblick auf den Arbeitsschutz besonders vorteilhaft ist die Verwendung von Ethylenglykolmonoethylether oder Ethylenglykolmonobutylether, deren Siedepunkt jeweils erst um 130°C liegt und die daher einen niedrigen Dampfdruck aufweisen.

Hiermit wird die Arbeitsplatzbelastung mit Dämpfen gegenüber der Verwendung von Alkoholen deutlich verringert.

Im Rahmen der Erfindung kann das Verfahren so geführt werden, daß man als Kleberkomponente für das Gemisch ein Polyester- oder Phenolharz verwendet. Solche Harze sind als zweckentsprechende Kleber im Handel erhältlich.

Ferner ist es möglich, das Gleitmittel mit Klebern aus der Klasse der Ein- oder Zweikomponenten-Epoxidharze zu mischen. Beispiele hierfür sind katalysierte Einkomponenten-Epoxidharze, welche durch "-onium-Salze" von BF₄⁻, PF₆⁻, AsF₆⁻ oder SbF₆⁻, zweckmäßig beim Erwärmen auf 60 bis 90°C, selbständig vernetzen.

Weitere Beispiele aus dieser Klebergruppe sind kalthärtende Zweikomponenten-Epoxidharze, welche zuerst gemischt und dann zusammen mit dem Gleitmittel auf die Klebeflächen aufgetragen werden, oder bei welchen die beiden Komponenten des Klebers getrennt auf einander gegenüberliegende Flächen vor deren Zusammenfügen verbracht werden; zweckmäßig enthält dabei eine der Komponenten auch das Gleitmittel. Die Vernetzung erfolgt dann von selbst nach einiger Zeit; sie kann jedoch zweckmäßigerweise durch Temperatureinwirkung von 60 bis 120°C beschleunigt werden.

Als Kleberanteil des Gemischs kann erfindungsgemäß auch ein Isocyanat gewählt werden. Beispiele für solche Isocyanate sind Toluenediisocyanat, 2,4 Diphenylmetahndiisocyanat, Isophorondiisocyanat, Hexamethylendiisocyanat.

Die Isocyanate können für die bessere Lagerung und Handhabung in dimerisierter oder vekappter Form vorliegen.

Für die Einstellung der Lösung werden unpolare Lösungsmittel angewendet die gleichzeitig als Gleitmittel wirken können.

Die Viskosität der Lösung und die spätere mechanische Eingeschaft des Klebfilmes (Zähigkeit) wird durch Präpolymere der Polyurethane eingestellt bzw. erhöht.

Im Rahmen der Erfindung können auch aerob wirkende Methacrylat nach vorheriger Zwischenaktivierung (z.B. an der Luft) als Kleberanteil eingesetzt werden. Sie werden gleich nach der Aktivierung verarbeitet.

In Fällen, wo besonders hohe thermische Beständigkeiten gefordert werden, ist es vorteilhaft, wenn man ein anaerobes Klebersystem im Kleber-/Gleitmittelgemisch verwendet. Beispiele für solche Klebersysteme sind: Mehrfunktionelle (insbvesondere di- und trifunktionelle) Methacrylate, die bei Bedarf durch katalytisch wirkende Zusätze (zu dem Kleber und/oder zu dem Elastomeren) wird die Kleberaktion gesteuert bzw. verbessert.

Um beim erfindungsgemäßen Verfahren sicherzustellen, daß eine möglichst geringe, jedoch ausreichende Menge an Gleitmittel für die Benetzungs-, Schmier- und Eindiffusions-Vorgänge sowie genügend Kleber zur Verfügung steht, hat es sich als vorteilhaft erwiesen, wenn man ausschließlich die auf der bezüglich der axial verlaufenden Preßrichtung nach vorne zeigende Stirnfläche des gummielastischen, ringförmigen Federkörpers mit dem Kleber-/Gleitmittelgemisch versieht.

Nach der Erfindung gemäß Anspruch 9 vulkanisiert man zunächst den gummielastischen Ring (Federkörper) auf eines der Maschinenteile auf. Danach beschichtet man die noch freien Flächen des gummielastischen Ringes vor dem Verbinden mit weiteren Bauteilen mit dem Kleber-/Gleitmittelgemisch. Der endgültige Zusammenbau zu einem beliebigen Zeitpunkt wird durch diese Vorgehensweise sehr erleichtert.

In den Fällen, in denen schwer zu verklebende Elastomere, z.B. Ethylen-Propylen-Dien-Terpolymere, vorliegen oder wo die Bauteile hohen Betriebstemperaturen oder hohen mechanischen Belastungen unterworfen werden sollen, ist es jedoch zweckmäßig, sowohl die ringförmigen, elastomeren Federkörpers als auch die entsprechenden Anlageflächen der unnachgiebigen Bauteile mit einem Film des Kleber-/Gleitmittelgemischs zu belegen.

Das Verfahren eignet sich zur Herstellung aller Erzeugnisse aus Maschinenteilen, welche unnachgiebige, konzentrisch zueinander angeordnete, insbesondere metallische Bauteile mit einem radialen Ringspalt zwischen sich aufweisen, der kraftschlüssig durch einen Ring aus gummielastisch verformbarem, polymerem Werkstoff verschlossen ist, so zum Beispiel für Fluidblocs, Silentblocs, Einknöpflager, Gummibuchsen, elastische Gelenke, Kugelgelenke, Spurstangenköpfe, Gummiwalzen, Einpreßringe, Kardanwellenlager, Zwischenhülsen, Zentrierhülsen, Zwischenwellenlager oder Steckkupplungen.

Das Verfahren nach der Erfindung gibt dem Federkörper genügend Zeit, sich zu "setzen", das heißt den Zustand mit der geringstmöglichen Eigenspannung einzunehmen, bevor er mit den unnachgiebigen Gegenflächen durch Vernetzen des Klebers festhaftend verbunden ist.

Als Bauteile mit den größten Anforderungen an bauliche und mechanische Präzision, welche mit dem vorgeschlagenen Verfahren hergestellt werden können, seien insbesondere Torsionsschwingungsdämpfer genannt, deren Zusammenbau hiermit besonders einfach und mit wenigen Verfahrensschritten, ohne Einbußen bezüglich des Kraftschlusses am fertigen Erzeugnis, erfolgen kann.

Die zur Verfügung stehende große Auswahl an Estern bzw. Estergemischen, welche als in den Kleber einmischbare Gleitmittel geeignet sind, erlaubt es, elastomere Bauteile unterschiedlichster Art zu verwenden, welche auch in verschieden starker Weise in der Lage sind, das Gleitmittel in sich eindiffundieren zu lassen. In allen Fällen wirkt das Gleitmittel auch als Transporthilfsmittel für den Kleber. Gleich gute Qualitäten der Klebeverbindungen sind somit gewährleistet.

Im Automobilbau beispielsweise ist es mit dem hier vorgeschlagenen Verfahren besonders wirtschaftlich möglich, auch erst bei der Montage die drehsymmetrischen Gummi/Metallbauteile bei Raumtemperatur und dennoch mit ausgezeichneter Bindung des Federkörpers herzustellen, da für das Kleber-/Gleitmittelgemisch zahlreiche Klebersysteme zur Verfügung stehen, welche ohne zusätzliche Temperatureinwirkung ihre vollen Klebekräfte entfalten.

## Patentansprüche

1. Verfahren zum Einpressen eines überdimensionierten Federkörpers aus einem gummielastisch verformbaren, polymerem Werkstoff in den durch den radialen Abstand gebildeten Spalt zwischen zwei unnachgiebigen, insbesondere metallischen, konzentrisch zueinander angeordneten Maschinenteilen, wobei man den Federkörper und / oder die den Spalt begrenzenden Flächen der Maschinenteile mit einem auch als Gleitmittel wirkenden, reaktiven Kleber benetzt und wobei man den Federkörper nachfolgend verformt und in den Spalt einpreßt und wobei man einen wärmeaktivierbaren oder katalytisch aktivierbaren Kleber oder Klebergemische verwendet, **dadurch gekennzeichnet, dass** der Federkörper und der Spalt zwischen den Maschinenteilen ringförmig ausgebildet ist und daß man ein Gemisch verwendet, welches aus dem Kleber und aus 20 bis 70 Vol.-% eines nicht wasserlöslichen, organischen Gleitmittels aus einem oder mehreren Polyestern besteht, daß das Gleitmittel selbst zu 30 bis 90 Vol.-% aus polymeren Estern von Mono- und/oder Dicarbonsäuren, vorzugsweise Maleinsäure, Phthalsäure, Sebacinsäure, Adipinsäure, besteht, daß der Gleitmittelanteil eine Dichte p (20°C) von 0,91 bis 1,16 kg/m³ besitzt und daß das Kleber- / Gleitmittelgemisch eine Viskosität von 200 mPa.s bis 4500 mPa.s aufweist.

2. Verfahren nach Anspruch 1, **dadurch gekennzeichnet, daß** man mindestens zwei verschiedene Ester als Gleitmittelanteil des Gemischs dem Kleber zusetzt.

3. Verfahren nach Anspruch 1 oder 2, **dadurch gekennzeichnet, daß** das Gleitmittel 70 bis 10 Vol.-% eines aliphatischen Kohlenwasserstoffs mit einem Siedepunkt zwischen 60 und 280°C oder den gleichen Anteil eines Kohlenwasserstoffs aus Alkoholen oder aus Benzinfraktionen enthält.

4. Verfahren nach Anspruch 1 bis 3, **dadurch gekennzeichnet, daß** der Kleberanteil des Gemischs aus einem Polyester- oder Phenolharz besteht.

5. Verfahren nach Anspruch 1 bis 3, **dadurch gekennzeichnet, daß** der Kleberanteil des Gemischs aus einem Ein- oder Zweikomponenten-Epoxidharz besteht.

6. Verfahren nach Anspruch 1 bis 3, **dadurch gekennzeichnet, daß** der Kleberanteil des Gemischs aus einem Isocyanat besteht.

7. Verfahren nach Anspruch 1 bis 3, **dadurch gekennzeichnet, daß** der Kleberanteil aus einem anaeroben Klebersystem besteht.

8. Verfahren nach Anspruch 1 bis 7, **dadurch gekennzeichnet, daß** man nur die auf der bezüglich der Einpreßrichtung nach vorne zeigende Stirnfläche des ringförmigen, elastomeren Federkörpers mit dem Kleber-/Gleitmittelgemisch versieht.

9. Verfahren zum Einpressen und Verbinden eines überdimensionierten Federkörpers aus einem gummielastisch verformbaren, polymerem Werkstoff in den durch den radialen Abstand gebildeten Spalt zwischen zwei unnachgiebigen, insbesondere metallischen, konzentrisch zueinander angeordneten Maschinenteilen, wobei man einen wärmeaktivierbaren oder katalytisch aktivierbaren Kleber oder Klebergemische verwendet, die als Gleitmittel wirken, **dadurch gekennzeichnet, daß** man den ringförmigen, elastomeren Federkörper auf eines der Maschinenteile aufvulkanisiert und zu einem beliebigen, späteren Zeitpunkt seine noch freien Flächen vor dem Verbinden mit dem zweiten Maschinenteil mit dem Kleber-/Gleitmittelgemisch versieht, wobei zum Verbinden mit dem zweiten Maschinenteil der Federkörper verformt wird und auf das erste Maschinenteil aufgepresst bzw. darin eingepresst wird, dass der Federkörper und der Spalt zwischen den Maschinenteilen ringförmig ausgebildet ist und dass man ein Gemisch verwendet, welches aus dem Kleber und aus 20 bis 70 Vol.-% eines nicht wasserlöslichen, organischen Gleitmittels aus einem oder mehreren Polyestern besteht, dass das Gleitmittel selbst zu 30 bis 90 Vol.-% aus polymeren Estern von Mono- und/oder Dicarbonsäuren, vorzugsweise Maleinsäure, Phthalsäure, Sebacinsäure, Adipinsäure, besteht, dass der Gleitmittelanteil eine Dichte p (20°C) von 0,91 bis 1,16 kg/m³ besitzt und dass das Kleber-/Gleitmittelgemisch eine Viskosität von 200 mPa.s bis 4500 mPa.s aufweist.

10. Verfahren nach einem der vorherigen Ansprüche, **dadurch gekennzeichnet, daß** man es zur Herstellung eines Torsionsschwingungsdämpfers verwendet.

## Claims

1. A method for pressing in an overdimensioned spring body comprising an elastomerically deformable, polymeric material into the gap, formed by the radial distance, between two unyielding, in particular metallic , machine parts arranged concentrically with one another, the spring body and/or those surfaces of the machine parts which bound the gap being wet with a reactive adhesive also acting as a lubricant, and the spring body being subsequently deformed and pressed into the gap, and a heat-activatable or catalytically activatable adhesive or adhesive mixture being used, **characterized in that** the spring body and the gap between the machine parts are annular and **in that** a mixture which consists of the adhesive and of 20 to 70% by volume of a water-insoluble, organic lubricant comprising one or more polyesters is used, **in that** the lubricant itself comprises 30 to 90% by volume of polymeric esters of mono- and/or dicarboxylic acids, preferably maleic acid, phthalic acid, sebacic acid or adipic acid, **in that** the lubricant fraction has a density p (20°C) of 0.91 to 1.16 kg/m³ and **in that** the adhesive/lubricant mixture has a viscosity of 200 mPa.s to 4 500 mPa.s.

2. A method as claimed in claim 1, **characterized in that** at least two different esters are added as a lubricant fraction of the mixture to the adhesive.

3. A method according to claim 1 or 2, **characterized in that** the lubricant contains 70 to 10% by volume of an aliphatic hydrocarbon having a boiling point of from 60 to 280°C or the same proportion of a hydrocarbon obtained from alcohols or from naphtha fractions.

4. A method according to any of claims 1 to 3, **characterized in that** the adhesive fraction of the mixture consists of a polyester resin or a phenol resin.

5. A method according to any of claims 1 to 3, **characterized in that** the adhesive fraction of the mixture consists of a one-component or two-component epoxy resin.

6. A method according to any of claims 1 to 3, **characterized in that** the adhesive fraction of the mixture consists of an isocyanate.

7. A method according to any of claims 1 to 3, **characterized in that** the adhesive fraction consists of an anaerobic adhesive system.

8. A method according to any of claims 1 to 7, **characterized in that** only that end face of the annular, elastomeric spring body which faces forwards with respect to the pressing-in direction is provided with the adhesive/lubricant mixture.

9. A method for pressing in and binding an overdimensioned spring body comprising an elastomerically deformable, polymeric material into the gap, formed by the radial distance, between two unyielding, in particular metallic machine parts arranged concentrically with one another, a heat-activatable or catalytically activatable adhesive or adhesive mixture which acts as lubricant being used, **characterized in that** the annular, elastomeric spring body is vulcanized onto one of the machine parts and its still free surfaces are provided with the adhesive/lubricant mixture at any desired later time before bonding to the second machine part, the spring body being deformed and being pressed onto the first machine part or into it for bonding to the second machine part, **in that** the spring body and the gap between the machine parts are annular and **in that** a mixture which consists of the adhesive and of 20 to 70% by volume of a water-insoluble, organic lubricant comprising one or more polyesters is used, **in that** the lubricant itself comprises 30 to 90% by volume of polymeric esters of mono- and/or dicarboxylic acids, preferably maleic acid, phthalic acid, sebacic acid or adipic acid, **in that** the lubricant fraction has a density p (20°C) of 0.91 to 1.16 g/m³ and **in that** the adhesive/lubricant mixture has a viscosity of 200 mPa.s to 4 500 mPa.s.

10. A method according to any one of the preceding claims, **characterized in that** it is used for the production of a torsional vibration damper.

## Revendications

1. Procédé pour presser un élément de ressort surdimensionné, en matériau polymère déformable élastiquement, dans l'espace formé par l'écartement radial entre deux pièces de machines rigides, notamment métalliques, disposées de manière concentrique l'une par rapport à l'autre, l'élément de ressort et/ou les surfaces des pièces de machine délimitant l'espace étant humidifiées avec une colle réactive agissant également comme lubrifiant et l'élément de ressort étant ensuite déformé et pressé dans l'espace, et une colle ou des mélanges de colles pouvant être activés à la chaleur ou catalytiquement étant utilisés, **caractérisée en ce que** l'élément de ressort et l'espace entre les pièces de machine sont formés de manière annulaire et **en ce que** l'on utilise un mélange composé de la colle et d'un volume de 20 à 30% d'un lubrifiant organique non soluble dans l'eau constitué d'un ou de plusieurs polyesters, **en ce que** le lubrifiant est constitué lui-même d'un volume de 30 à 90% d'esters polymères d'acides monocarbocyliques et/ou dicarbocyliques, de préférence d'acide maléique, d'acide phtalique, d'acide sébacique, d'acide adipique, et **en ce que** la proportion du lubrifiant possède une densité p (20°C) de 0,91 à 1,16 kg/m³ et **en ce que** le mélange colle/lubrifiant présente une viscosité de 200 mPa.s à 4500 mPa.s.

2. Procédé selon la revendication 1, **caractérisée en ce que** l'on ajoute à la colle au moins deux esters différents comme proportion de lubrifiant du mélange.

3. Procédé selon la revendication 1 ou 2, **caractérisée en ce que** le lubrifiant contient un volume de 70 à 10% d'un hydrocarbure aliphatique ayant un point d'ébullition entre 60 et 280°C ou la même proportion d'un hydrocarbure d'alcools ou de fractions d'essence.

4. Procédé selon la revendication 1 à 3, **caractérisée en ce que** la proportion de colle du mélange est constituée d'une résine de polyester ou d'une résine phénolique.

5. Procédé selon la revendication 1 à 3, **caractérisée en ce que** la proportion de colle du mélange est constituée d'une résine époxy à un ou à deux composants.

6. Procédé selon la revendication 1 à 3, **caractérisée en ce que** la proportion de colle du mélange est constituée d'un isocyanate.

7. Procédé selon la revendication 1 à 3, **caractérisée en ce que** la proportion de colle est constituée d'un système de colle anaérobie.

8. Procédé selon la revendication 1 à 7, **caractérisée en ce que** l'on munit seulement la surface frontale de l'élément de ressort élastomère en forme d'anneau, dirigée vers l'avant en ce qui concerne le sens de pressage, du mélange colle/lubrifiant.

9. Procédé pour presser et raccorder un élément de ressort surdimensionné, en matériau polymère déformable élastiquement, dans l'espace formé par l'écartement radial entre deux pièces de machines rigides, notamment métalliques, disposées de manière concentrique l'une par rapport à l'autre,dans lequel on utilise une colle ou des mélanges de colles pouvant être activés à la chaleur ou catalytiquement, qui servent de lubrifiant, **caractérisée en ce que** l'on vulcanise l'élément de ressort élastomère en forme d'anneau sur l'une des pièces de machine et que l'on munit, à n'importe quel moment plus tard, ses surfaces encore libres du mélange colle/lubrifiant avant de les raccorder à la seconde pièce de machine, l'élément de ressort étant déformé pour son raccordement à la seconde pièce de machine et étant pressé sur resp. dans la première pièce de machine, **en ce que** l'élément de ressort et l'espace entre les pièces de machine sont formés de manière annulaire et **en ce que** l'on utilise un mélange, constitué de la colle et d'un volume de 20 à 70% d'un lubrifiant organique, non soluble dans l'eau constitué d'un ou de plusieurs polyesters, **en ce que** le lubrifiant est constitué lui-même d'un volume de 30 à 90% d'esters polymères d'acides monocarbocyliques et/ou dicarbocyliques, de préférence d'acide maléique, d'acide phtalique, d'acide sébacique, d'acide adipique, **en ce que** la proportion de lubrifiant possède une densité p (20°C) de 0,91 à 1,16 kg/m³ et **en ce que** le mélange colle/lubrifiant présente une viscosité de 200 mPa.s à 4500 mPa.s.

10. Procédé selon l'une des revendications précédentes, **caractérisée en ce qu'**on l'utilise pour la fabrication d'un amortisseur de vibrations de torsion.
